# EUROPÄISCHE PATENTSCHRIFT

(11) **EP 2 102 723 B1**
(45) Veröffentlichungstag und Bekanntmachung des Hinweises auf die Patenterteilung: **16.05.2012**
(21) Anmeldenummer: 07856370.7
(22) Anmeldetag: 05.12.2007
(51) Int. Cl.: G05B 19/042, G05B 23/02, G01M 17/007

(54) **VERFAHREN UND VORRICHTUNG ZUM DIAGNOSTIZIEREN VON FUNKTIONEN UND FAHRZEUGSYSTEMEN**
METHOD AND DEVICE FOR THE DIAGNOSIS OF FUNCTIONS AND VEHICLE SYSTEMS
PROCÉDÉ ET DISPOSITIF POUR DIAGNOSTIQUER DES FONCTIONS ET DES SYSTÈMES DE VÉHICULES

(30) Priorität: 14.12.2006 DE 102006059037
(43) Veröffentlichungstag der Anmeldung: 23.09.2009
(73) Patentinhaber: VOLKSWAGEN AG, 38436 Wolfsburg (DE)
(72) Erfinder: BROSE, Heino, 39646 Oebisfelde (DE); UNGER, Andreas, 01069 Dresden (DE)
(74) Vertreter: Obst, Bernhard
(86) Internationale Anmeldenummer: PCT/EP2007/010529
(87) Internationale Veröffentlichungsnummer: WO 2008/071323

(56) Entgegenhaltungen:
- DE-A1- 10 017 788
- DE-A1- 10 231 671
- DE-A1- 19 841 260
- DE-U1-202006 003 273
- US-A1- 2006 064 291

## Beschreibung

Die Erfindung betrifft ein Verfahren und eine Vorrichtung zum Diagnostizieren von über ein Kommunikationsnetz vernetzten Fahrzeugsystemen eines Kraftfahrzeugs und von von diesen Fahrzeugsystemen bereitgestellten Funktionen, wobei die Fahrzeugsysteme beim Ausführen der Funktionen Signale über das Kommunikationsnetz austauschen und beim Diagnostizieren zumindest ein Teil der Signale ausgewertet wird.

Die immer stärkere Vernetzung von Komponenten, Funktionen und Teilsystemen führt zu einem rasanten Anstieg der Gesamtkomplexität elektronischer Systeme im Fahrzeug. Die Erkennung und Behebung von Fehlern bedarf aufgrund der hohen Komplexität der Vernetzung erweiterter und neuer Maßnahmen und Methodiken bei der Diagnose. Zum einen werden immer höheren Anforderungen an die Fahrzeuge hinsichtlich Komfort und Sicherheit gestellt. Hiermit einhergehenden erfolgt eine Integration immer komplexerer und höher vernetzter Funktionen in Fahrzeugen. Zum anderen steigt die Modellvielfalt der Fahrzeuge beständig. Softwarefunktionen werden hierbei je nach Fahrzeugmodell auf verschiedene Steuergeräte verteilt. Die sich daraus ergebende Variantenvielfalt hinsichtlich der Anzahl und Verknüpfung der Anwenderfunktionen erschwert eine Fahrzeugdiagnose allgemein.

Um eine korrekte Überwachung und Diagnose komplexer Funktionsnetzwerke durchführen zu können, ist es notwendig, den Ablauf einzelner Funktionen zu überwachen. Anhand dieses Ablaufs kann erkannt werden, ob ein Fehlverhalten vorliegt oder nicht.

Die Fahrzeugsysteme, die die unterschiedlichen Funktionen bereitstellen, sind über ein Kommunikationsnetz nachrichtentechnisch verknüpft. Beim Ausführen der Funktionen tauschen die einzelnen Fahrzeugsysteme, die meist als Steuergeräte ausgebildet sind, Kommunikationsnachrichten aus, die auch verkürzt als Nachrichten bezeichnet werden.

Eine oben erwähnte Ablaufüberwachung erfolgt anhand der Kommunikationsnachrichten der verteilten Funktionen. Hierbei wird ein entsprechend aufbereitetes Diagnosewissen verwendet.

Um einen korrekten Funktionsablauf aller Funktionen zu überwachen, wird eine sehr hohe Rechenkapazität in der Diagnosevorrichtung benötigt und ist eine große Übertragungsbandbreite des Kommunikationsnetzes zu der Diagnosevorrichtung notwendig, da sehr viele Signale überwacht werden müssen.

Aus DE 20 2006 003 273 A1 ist eine Diagnosevorrichtung in einem Fahrzeug für eine funktionsorientierte Diagnose bekannt, bei der einzelne Signale für eine Überwachung ausgewählt werden, die eine Ausführung (einen Start) einer Funktion und einen Abschluss der Funktion signalisieren. Hierdurch kann die Anzahl der zu überwachenden Signale eingegrenzt werden. Wird anhand der so überwachten Signale ein Schlechtverhalten oder ein Fehler diagnostiziert, so kann eine detaillierte Diagnose der entsprechenden Funktion ausgeführt werden. Dennoch ist eine Überwachung sämtlicher-Fahrzeugfunktionen kaum möglich. Eine Schwierigkeit liegt somit darin, dass funktionale Zustände, die das diagnostisch relevante Funktions- und Systemverhalten kennzeichnen, im laufenden Betrieb nur schwer bzw. nicht rechtzeitig erkannt werden können. Der Aufwand, zu jedem Zeitpunkt alle Funktionen gleichzeitig zu überprüfen und zu diagnostizieren, ist enorm.

Aus DE 103 33 181 A1 ist ein Bayes-Netz-basiertes Diagnosesystem mit zeitlichem Verhalten bekannt. Beschrieben ist ein Diagnoseverfahren mit einem Bayes-Netz-basierten Expertensystem, bei dem der Zustand des technischen Systems mit Sensoren erfasst und auf Zustandsparameter abgebildet wird. Für die mit dem Expertensystem zu treffende Diagnoseentscheidung werden Wahrscheinlichkeitsschwellwerte vorgehalten, die aus Erfahrung oder durch Modellberechriungen gewonnen wurden. Die Wahrscheinlichkeitsschwellwerte können für verschiedene Zustände des technischen Systems unterschiedliche Werte haben. Ändert sich der Zustand des technischen Systems mit der Zeit, so ändern sich auch die Zustandsparameter mit der Zeit. Die zeitliche Dynamisierung des Bayes-Netz basierten Expertensystems gelingt dann, indem anhand der Zustandsparameter je nach zeitlichem Systemzustand unterschiedliche Wahrscheinlichkeitsschwellwerte für die automatisierte Diagnoseentscheidung ausgewählt werden. Es handelt sich hierbei um zeitlich dynamische Bayesische Netze.

Aus DE 102 22 072 ist ein Diagnoseverfahren für dynamische Systeme, beispielsweise Kraftfahrzeuge, bekannt. Vorgeschlagen wird ein automatisches Diagnoseverfahren für ein dynamisches technisches System, welches auf einer Anregung mit einem dynamischen Systemausgangsverhalten reagiert und folgende Verfahrensschritte umfasst: Bestimmen von das Systemsausgangsverhalten charakterisierenden Koeffizienten aus mindestens einer das Systemausgangsverhalten darstellenden Messkurve, Bestimmen diskreter Systemzustände aus den Koeffizienten, Zuweisen der diskreten Systemzustände als Eingangsdaten eines Wahrscheinlichkeitsnetzes und Verarbeiten der Eingangsdaten in dem Wahrscheinlichkeitsnetz zum Berechnen eines Diagnoseergebnisses, wobei mindestens ein die Anregung des Systems charakterisierender Parameter als Eingangsgröße des Wahrscheinlichkeitsnetzes zugewiesen wird und in das Berechnen des Diagnoseergebnisses eingeht. Hierbei werden Messergebnisse über die Verwendung eines Wahrscheinlichkeitsnetzes analysiert, um ein Fehlverhalten festzustellen. Eine Eingrenzung der zu überwachenden Funktionen findet nicht statt.

Aus DE 102 35 525 B4 sind ein Verfahren und ein System zum Überwachen des Zustands eines Fahrzeugs bekannt. Das vorgeschlagene Verfahren umfasst folgende Schritte: Bereitstellen einer ersten Version eines Verhaltens modells der zu überwachenden Komponente durch ein Off-Board-System; Sammeln von Leistungsdaten der zu überwachenden Komponente durch ein On-Board-System; Bewerten der gesammelten Daten durch das On-Board-System mit Hilfe des ersten Verhaltensmodells; Bestimmen, wann eine Diskrepanz zwischen dem Verhaltensmodell und den gesammelten Leistungsdaten vorliegt; Bestimmen, ob die Diskrepanz von einem Ausfall der Komponente herrührt; und wenn die Diskrepanz nicht von einem Ausfall der Komponente herrührt, Modifizieren der ersten Version des Verhaltensmodells durch das Off-Board-System. Dieses Verfahren ist geeignet, um anhand gewonnener Messdaten eines ersten technischen Systems und eines hierfür entwickelten Verhaltensmodells anhand von ermittelten Daten eines veränderten technischen Systems ein angepasstes Verhaltensmodell zu erhalten.

Aus der DE 20 2006 003 272 U1 ist eine Diagnosevorrichtung in einem Fahrzeug für eine funktionsorientierte Diagnose von durch ein Fahrzeugdatenbussystem vernetzen Fahrzeugsystemen und von diesen bereitgestellten Fahrzeugfunktionen bekannt, wobei die Fahrzeugsysteme beim Ausführen der Fahrzeugfunktionen über das Fahrzeugdatenbussystem Signale austauschen. Die Diagnosevorrichtung umfasst eine Selektionseinheit zum Selektieren ausgewählter Signale aus den über das Fahrzeugdatenbussystem übertragenen Signale anhand vorgegebener Auswahlkriterien, eine Wissensbasis, in der Informationen über die mit dem Ausführen der Fahrzeugfunktionen in Zusammenhang stehenden Signale, Fahrzeugsysteme und Komponenten abgelegt sind, eine Bewertungseinheit, die die ausgewählten Signale anhand von Informationen der Wissensbasis bewerten, um Abweichung und/oder Übereinstimmung mit einem anhand der Wissensbasis festgelegten Gutverhalten oder Schlechtverhalten einer der Fahrzeugfunktionen zu ermitteln, und eine Ausgabeeinheit, die eine Diagnoseinformation basierend auf der Bewertung ausgibt. Die Selektion erfolgt so, dass die je Funktion ausgewerteten Signale eingeschränkt werden.

Aus der DE 198 41 260 A1 sind ein fahrzeugeigenes Diagnosesystem und ein Verfahren zum Erkennen von Fehlzuständen an Teilsystemen eines Kraftfahrzeugs bekannt. Bei dem Verfahren sind die Teilsysteme einer Vielzahl von lokalen Diagnosemodulen zugeordnet. Die lokalen Diagnosemodule kommunizieren mit einem zentralen Diagnosemodul. Das zentrale Diagnosemodul ist derart mit den lokalen Diagnosemodulen verknüpft, dass dem zentralen Diagnosemodul Zwischenzustände der lokalen Diagnosemodule zuführbar sind, die zwischen einem Normalzustand und einem Fehlerzustand liegen. Die zentrale Handhabung von Fehlzuständen erleichtert die Konfiguration des Diagnosesystems. Durch die Behandlung von Zwischenzuständen ist eine besonders feine Auflösung der Diagnosen möglich.

Keines der bekannten Systeme ist in der Lage, eine Vielzahl von Funktionen, wie sie in modernen Kraftfahrzeugen auftreten, unter Berücksichtigung der nur begrenzt zur Verfügung stehenden Ressourcen für eine Fahrzeugdiagnose sinnvoll zu überwachen. Insbesondere eine Diagnose des Gesamtsystems ist nur mit sehr großem Aufwand möglich.

Der Erfindung liegt das technische Problem zugrunde, ein Verfahren und eine Vorrichtung eingangs genannter Art zum Diagnostizieren von Fahrzeugsystemen und von von diesen Fahrzeugsystemen bereitgestellten Funktionen zu schaffen, mit denen eine verbesserte Diagnose möglich ist, insbesondere eine Überwachung der Funktionen verbessert wird, die aus der Vielzahl der zur Verfügung stehenden Funktionen tatsächlich ausgeführt werden, wobei die Diagnose bei einem möglichst geringen technischen Aufwand ausführbar sein soll.

Die Aufgabe wird erfindungsgemäß durch ein Verfahren mit den Merkmalen des Patentanspruchs 1 sowie eine Vorrichtung mit den Merkmalen des Patentanspruchs 8 gelöst. Vorteilhafte Ausgestaltungen der Erfindung ergeben sich aus den Unteransprüchen.

Nach einem ersten Aspekt der Erfindung ist vorgesehen, Zustände für das Kraftfahrzeug festzulegen und die Funktionen, die von den Fahrzeugsystemen bereitgestellt werden, den Zuständen zuzuordnen. Ferner ist vorgesehen, dass mindestens ein ausgezeichnetes Signal der Signale, die beim Ausführen und Bereitstellen der Funktionen von den verschiedenen Fahrzeugsystemen über das Kommunikationsnetz übertragen werden, verwendet wird, um mindestens einen der vorliegenden Zustände des Kraftfahrzeugs zu ermitteln. In einer Ausführungsform wird die Diagnose anschließend eingeschränkt, dass nur relevante Signale für die Funktionen ausgewertet werden, die dem mindestens einen ermittelten Zustand zugeordnet sind.

Ein Zustand ist allgemein eine durch bestimmte Eingangsgrößen gekennzeichnete grobgranulare Klassifikation des Gesamtsystems, die ein typisches Verhalten des Fahrzeugs wiedergibt oder wiederspiegelt. Abhängig von der Eingangsgröße können unterschiedliche Zustände festgelegt sein. Durch die Zuordnung der Funktionen zu den unterschiedlichen Zuständen ist es möglich, Diagnosewissen so auszunutzen, so dass die Diagnose bzw. das Diagnostizieren auf.diejenigen Funktionen eingeschränkt werden kann, die dem jeweiligen Zustand zugeordnet sind. Hierdurch wird eine erhebliche Reduktion der zu überwachenden Funktionen erreicht. Insbesondere werden die Funktionen überwacht, die im Zusammenhang mit dem ermittelten Zustand bzw. den ermittelten Zuständen im Zusammenhang ausgeführt werden oder mit hoher Wahrscheinlichkeit zukünftig ausgeführt werden.

Insbesondere wird nach dem ersten Aspekt der Erfindung ein Verfahren zum Diagnostizieren von über ein Kommunikationsnetz vernetzten Fahrzeugsystem eines Kraftfahrzeugs und von von diesem Fahrzeugsystem bereitgestellten Funktionen geschaffen, wobei die Fahrzeugsysteme beim Ausführen der Funktionen Signale über das Kommunikationsnetz austauschen und beim Diagnostizieren zumindest ein Teil der Signale ausgewertet wird, wobei Zustände des Kraftfahrzeugs festgelegt sind und die Funktionen den Zuständen zugeordnet sind und mindestens ein ausgezeichnetes Signal der Signale verwendet wird, um mindestens einen vorliegenden der Zustände des Kraftfahrzeug zu ermitteln und beim Diagnostizieren nur relevante Signale für die Funktionen ausgewertet werden, die dem mindestens einen ermittelten Zustand zugeordnet sind.

Eine erfindungsgemäße Vorrichtung umfasst somit nach dem ersten Aspekt der Erfindung Zustandsermittlungsmittel, um mindestens einen vorliegenden der Zustände des Kraftfahrzeugs unter Verwendung mindestens eines ausgezeichneten Signals zu ermitteln. Ferner sind Diagnosemittel der Vorrichtung so ausgestaltet, dass beim Diagnostizieren nur relevante Signale für die Funktionen ausgewertet werden, die dem mindestens einen ermittelten Zustand zugeordnet sind. Die Diagnosemittel können somit eine Diagnose der Fahrzeugfunktionen und Fahrzeugsysteme zuverlässig mit einer Hardware bewerkstelligen, die einen geringeren Umfang aufweist, insbesondere hinsichtlich einer Rechenleistung und einer Empfangsbandbreite für überwachte Signale, als eine Vorrichtung, die sämtliche Signale sämtlicher Funktionen zeitgleich überwachen muss. Hierdurch wird ein vereinfachter Aufbau der Diagnosemittel ermöglicht. Ferner wird eine Kostenreduktion erreicht, da die Hardware nicht so aufwendig ausgestaltet werden muss.

Als besonders vorteilhaft hat es sich erwiesen, beim Ermitteln des mindestens einen vorliegenden Zustands des Kraftfahrzeugs ein neuronales Netz zu verwenden, wobei das mindestens eine ausgezeichnete Signal als ein Eingangssignal des neuronalen Netzes genutzt wird. Neuronale Netze können für vielfältige Aufgaben sinnvoll eingesetzt werden. Unter anderem können neuronale Netze eingesetzt werden, um bestimmte Muster, insbesondere Signalmuster, zu erkennen. Anhand eines solchen erkannten Musters für ein Eingangssignal bzw. einen Eingangsvektor, der mehrere Messwerte umfasst, kann auf einfache und zuverlässige Weise eine Klassifikation hinsichtlich vorgegebener Muster erfolgen. Die Muster können vorgegeben sein oder durch das neuronale Netz erlernt sein. Ferner ist es möglich, neuronale Netze so auszugestalten, dass sie während ihres Betriebs neue Muster erlernen bzw. eine Verfeinerung der erlernten Muster selbständig ausführen können. Ein neuronales Netz kann somit verwendet werden, ein Signalmuster zu erkennen und klassifizieren, das einen Zustand des Kraftfahrzeugs charakterisiert.

Als besonders vorteilhafte Ausbildung der Erfindung hat es sich erwiesen, als festgelegte Zustände funktionale Zustände des Kraftfahrzeugs zu verwenden und die Zuordnung der Funktionen über Funktionsgruppen vorzunehmen, die mit den funktionalen Zuständen korrespondieren. Als ein funktionaler Zustand wird somit ein durch bestimmte ablaufende Funktionen oder Funktionsszenarien grobgranularer Zustand des Gesamtsystems angesehen, der ein typisches Verhalten des Fahrzeugs wiedergibt. Dies bedeutet, dass bestimmte ablaufende Funktionen oder Funktionsszenarien eine grobgranulare Klassifikation des Fahrzeugs darstellen. Ein Funktionsszenario ist hierbei eine Bezeichnung für eine Bedien- oder Betriebsart einer Funktion. Eine Funktion kann somit aus mehreren Szenarien bestehen. Betrachtet man beispielsweise die Funktion Verriegeln des Fahrzeugs, so kann ein Szenario das Verriegeln des Fahrzeugs über eine Fernbedienung sein. Ein anderes Szenario kann das Verriegeln des Fahrzeugs über einen in ein Fahrzeugtürschloss eingeführten Schlüssel darstellen. Funktionsgruppen sind in dem hier verwendeten Kontext lediglich gedankliche Zusammenfassungen von Funktionen, die nicht notwendigerweise funktionell ähnliche Aufgaben erfüllen müssen. Funktionen können ferner mehreren Funktionsgruppen zugeordnet sein, wenn sie in unterschiedlichen funktionalen Zuständen des Fahrzeugs ausgeführt werden. Eine funktionale Klassifizierung der Zustände des Kraftfahrzeugs bietet sich besonders an, da die einzelnen bereitgestellten Dienste und erledigten Aufgaben von Funktionen zur Verfügung gestellt bzw. wahrgenommen werden und somit quasi eine "natürliche" Klassifizierungsgrundlage darstellen.

Als besonders vorteilhaft hat es sich herausgestellt, Fahrzustände, die sich an unterschiedlichen Fahrsituationen des Kraftfahrzeugs orientieren, festzulegen. Diesen verschiedenen Fahrsituationen bzw. Fahrzuständen sind wiederum Funktionszustände zugeordnet, denen wiederum die Funktionen des Fahrzeugs zugeordnet sind. Bei dieser Ausführungsform könnte die Zuordnung der Funktionen zu den Funktionsgruppen, über die diese den Fahrzuständen zugeordnet sind, unterbleiben und eine direkte Zuordnung der Funktionen zu den Fahrzuständen erfolgen.

Bei einer bevorzugten Ausführungsform der Erfindung nach dem ersten Aspekt der Erfindung ist vorgesehen, dass das mindestens eine ausgezeichnete Signal ein Geschwindigkeitssignal umfasst und das Ermitteln des Zustands ein Ermitteln eines von mehreren Fahrzuständen umfasst, denen jeweils mindestens einer der funktionalen Zustände zugeordnet ist. Eine Klassifikation über die Geschwindigkeit bietet sich deshalb an, weil eine Anzahl unterschiedlicher Fahrzustände für ein Fahrzeug festgelegt werden können, in denen unterschiedliche Funktionen bevorzugt ausgeführt werden. Beispielsweise wird ein Fahrer in einer Stausituation bevorzugt Funktionen eines Infotainmentsystems aufrufen. Bei einer Fahrsituation Stadtverkehr hingegen wird die Aufmerksamkeit eines Nutzers durch den Verkehr stärker beansprucht, so dass seine Neigung, Funktionen des Infotainmentsystems zu betätigen, stark abnimmt. Hingegen werden mit dem Führen des Kraftfahrzeugs verbundene Funktionen, beispielsweise das Blinken, mit einer sehr viel höheren Wahrscheinlichkeit ausgeführt. Diese Szenarien lassen sich insbesondere auf einfache Weise anhand der Fahrzeuggeschwindigkeit bzw. einem Muster der Fahrzeuggeschwindigkeit aufgetragen gegen die Zeit zuverlässig ermitteln. Insbesondere bei einer Ausführungsform, bei der das Geschwindigkeitssignal unter Verwendung eines neuronalen Netzes ausgewertet wird, ist eine solche Klassifizierung der unterschiedlichen Fahrsituationen in Fahrzustände zuverlässig und in mehrere Zustände möglich.

Alternativ oder zusätzlich ist es möglich, beim Ermitteln des Zustands des Fahrzeugs charakteristische Signale auszuwerten, wobei die charakteristischen Signale oder Kombinationen hiervon genutzt werden, um funktionale Zustände zu identifizieren. Als charakteristische Signale werden vorzugsweise solche Signale von Funktionen ausgewählt, die zum einen eindeutig eine Ausführung einer Funktion anzeigen, die andererseits charakteristisch für einen bestimmten funktionalen Zustand des Fahrzeugs sind.

Nach einem zweiten Aspekt der Erfindung, der in Kombination mit dem ersten Aspekt oder auch hiervon unabhängig einzeln realisiert werden kann, um die oben genannte Aufgabe zu lösen, ist vorgesehen, mittels eines Bayes-Netzes zumindest einen Teil der Funktionen, die von dem Fahrzeugsystem bereitgestellt werden, zu wichten und hierüber eine Auswahl der Funktionen zu ermöglichen, die mit Vorrang zu diagnostizieren sind. Nach dem zweiten Aspekt der Erfindung ist es ebenfalls vorteilhaft, die Menge der bereitgestellten Funktionen zunächst einzuschränken, insbesondere indem charakteristische Signale ausgewertet werden und hierüber funktionale Zustände des Fahrzeugs ermittelt werden, denen wiederum die Funktionen zugeordnet sind. Hier soll erneut darauf hingewiesen werden, dass eine Zuordnung der Funktionen zu den funktionalen Zuständen nicht eine eineindeutige, umkehrbare Zuordnung darstellt. Der Vorteil des Einsatzes eines Bayes-Netzes liegt insbesondere darin, dass unscharfes Diagnosewissen, das beispielsweise aus den Signalen stammt, verwendet werden kann, um hieraus verwertbare Aussagen abzuleiten. Insbesondere ist bei einer bevorzugten Ausführungsform der Erfindung nach dem zweiten Aspekt vorgesehen, dass mittels eines Bayes-Netzes abhängig von den ermittelten funktionalen Zuständen eine Wichtung mindestens eines Teils der Funktionen vorgenommen wird, so dass die Wichtung ein Maß für die Ausführung und/oder das zur Ausführung kommen des zumindest einen Teils der Funktionen angibt, und eine Diagnose der Funktionen unter Berücksichtigung der Wichtung erfolgt. Hierdurch wird es möglich, auch bei einer groben Zuordnung der Funktionen zu Funktionsgruppen, die einzelnen funktionalen Zuständen des Fahrzeugs zugeordnet sind, noch eine Unterauswahl der Funktionen anhand der ermittelten Wichtung vorzunehmen, welche Funktionen zunächst und/oder ausschließlich ausgewertet werden sollen. Mittels des Bayes-Netzes ist es somit möglich, die Funktionen zu ermitteln, die mit höchster Wahrscheinlichkeit ausgeführt werden oder in absehbarer Zukunft ausgeführt werden.

Um zu gewährleisten, dass auch Funktionen, die nur mit einer geringeren Wahrscheinlichkeit als andere Funktionen ausgeführt werden, diagnostiziert werden, ist bei einer bevorzugten Ausführungsform vorgesehen, dass eine erfolgreich ausgeführte Diagnose einer Funktion als Evidenz bei der Bestimmung der ermittelten Zustände berücksichtigt wird. Dies bedeutet, dass eine erfolgreich ausgeführte Diagnose einer Funktion quasi in das Bayes-Netz zurückgekoppelt wird, so dass bei einer erneuten Auswertung des Bayes-Netzes die soeben diagnostizierte Funktion nicht erneut mit einer hohen Wahrscheinlichkeit für eine Ausführung ausgegeben wird. Hierdurch wird erreicht, dass nach und nach in einem "quasi statischen Zustand des Fahrzeugs" sämtliche Funktionen, die zu diesem funktionalen Zustand gehören, ausgewertet werden. Als quasi statischer Zustand wird hier ein Zustand des Fahrzeugs angesehen, bei dem ohne Berücksichtigung der Evidenzen, die aus der erfolgreichen Diagnose von Fahrzeugfunktionen abgeleitet sind, jeweils derselbe bzw. dieselben Zustände des Fahrzeugs mit den gleichen Gewichten versehen würden.

Die Merkmale der erfindungsgemäßen Vorrichtung weisen dieselben Vorteile wie die entsprechenden Merkmale des erfindungsgemäßen Verfahrens sowohl nach dem ersten Aspekt als auch nach dem zweiten Aspekt der Erfindung auf.

Nach einem dritten Aspekt der Erfindung können sowohl der erste Aspekt der Erfindung als auch der zweite Aspekt der Erfindung kombiniert genutzt werden. Hierbei kann beispielsweise in Abhängigkeit einer Rechenleistung eine Eingrenzung der zu überwachenden Funktionen nur über eine Bestimmung von Zuständen des Fahrzeugs erfolgen oder zusätzlich oder alternativ eine Auswertung eines Bayes-Netzes vorgenommen werden, um eine Wichtung einzelner Funktionen vorzunehmen.

Nachfolgend wird die Erfindung anhand bevorzugter Ausführungsbeispiele näher erläutert. Hierbei zeigen:
- Fig. 1: eine schematische Darstellung der in einem Fahrzeug ausgeführten und ausführbaren Funktionen und hierbei ausgetauschten Signale sowie eine hieraus abgeleitete Diagnose;
- Fig. 2: eine schematische Darstellung der Zuordnung von Funktionen zu funktionalen Zuständen und der funktionalen Zustände zu Fahrzuständen;
- Fig. 3: eine schematische Darstellung eines neuronalen Netzes;
- Fig. 4: eine grafische Darstellung eines Geschwindigkeitssignals, aufgetragen gegen die Zeit;
- Fig. 5: eine schematische Darstellung eines neuronalen Netzes zur Ermittlung eines Fahrzustandes;
- Fig. 6: eine schematische Darstellung der ausgeführten und ausführbaren Funktionen nach Fig. 1, bei dem die Funktionen Fahrzuständen zugeordnet sind;
- Fig. 7: eine schematische Darstellung eines Diagnoseablaufs, bei dem die Menge der zu überwachenden Funktionen über ein neuronales Netz eingegrenzt wird;
- Fig. 8: eine schematische Darstellung zur Erläuterung der Zuordnung von Funktionen zu Zuständen und charakteristischen Signalen;
- Fig. 9: eine schematische Darstellung eines einfachen bayesschen Netzes;
- Fig. 10: eine Darstellung eines Ausschnitts eines komplexen bayesschen Netzes;
- Fig. 11: eine schematische Darstellung eines Diagnoseverfahrens, bei dem die zu überwachenden Funktionen anhand einer mittels eines bayesschen Netzes vorgenommen Wichtung ausgewählt werden; und
- Fig. 12: eine schematische Darstellung eines Diagnoseverfahrens, bei dem die zu überwachenden Funktionen alternativ oder kombiniert anhand der Auswertung eines neuronalen Netzes und eines bayesschen Netzes ermittelt werden.

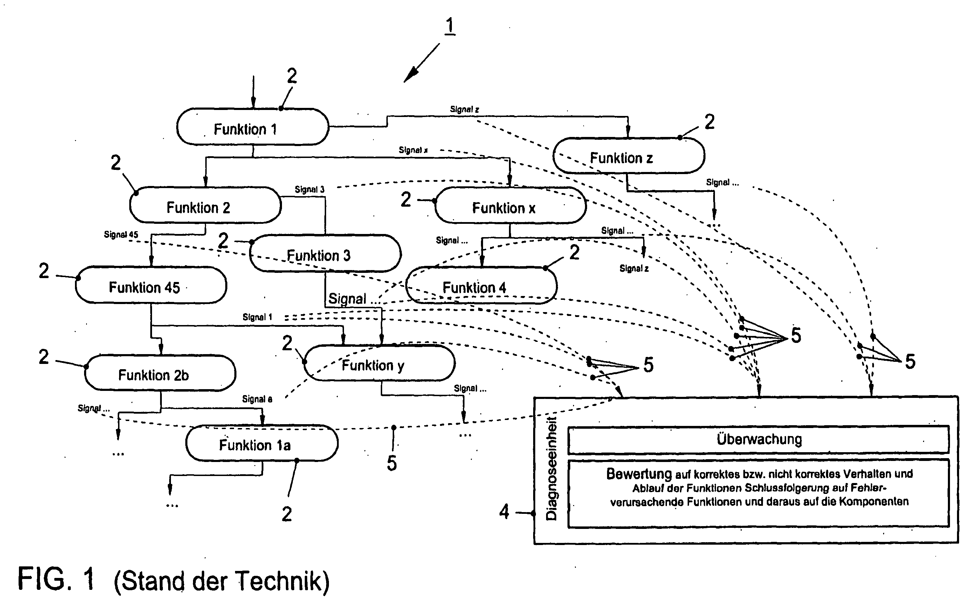

In Fig. 1 ist schematisch ein Ablaufdiagramm 1 von verschiedenen Funktionen 2 in einem Kraftfahrzeug nach dem Stand der Technik dargestellt. Die Funktionen 2 erzeugen Signale 3, die über ein Kommunikationsnetz ausgetauscht werden. Die Darstellung ist schematisch soweit vereinfacht, dass es zu jeder der Funktionen 2 jeweils eines der Signale 3 gibt, das eine Auslösung der jeweiligen Funktion anzeigt, und ein Signal gibt, welches die erfolgreiche Ausführung der Funktion anzeigt. Ein solches eine erfolgreiche Ausführung anzeigendes Signal wird bei der vereinfachten Darstellung als eine Auslösung einer anderen der Funktionen 2 darstellendes Signal 3 verwendet. Um die einzelnen Funktionen 2 überwachen zu können, werden die einzelnen Signale 3 von einer Diagnoseeinheit 4 ausgewertet. Die Übertragung der einzelnen Signale 3 zu der Überwachungseinheit 4 ist durch gestrichelte Pfeile 5 angedeutet. Auch bei diesem stark vereinfachten Ablaufdiagramm 1 sind eine Vielzahl von Signalen 3 zu überwachen. Anhand der Überwachung der Signale 3 kann aus einem Vergleich mit einem vorfestgelegten Diagnosewissen auf ein Gut- und/oder Schlechtverhalten der einzelnen Funktionen 2 geschlossen werden. Die Diagnoseergebnisse können beispielsweise in einem Fehlerspeicher abgelegt werden. Wird ein Fehlverhalten einer der Funktionen 2 festgestellt, so kann über das Diagnosewissen eine Zuordnung der zur Ausführung der fehlerhaften Funktion verwendeten Fahrzeugsysteme erfolgen und eine gezielte Diagnose der einzelnen Fahrzeugsysteme eingeleitet werden. Werden beispielsweise nur die Signale 3 überwacht, die eine Ausführung und ein Abschließen einer Funktion anzeigen, so kann beim Feststellen eines Schlechtverhaltes dieser Funktion für eine differenzierende Diagnose die Überwachung sämtlicher bei der Ausführung der Funktion erzeugten Signale erfolgen. Anhand dieser Auswertung oder einer gezielten Abfrage von Fehlerspeichern der an der Bereitstellung der Funktionen beteiligten Fahrzeugsysteme, die vorzugsweise als Steuergeräte ausgebildet sind, kann eine Eingrenzung des Fehlers und eine Lokalisierung der fehlerhaften Hardware und/oder Software erfolgen.

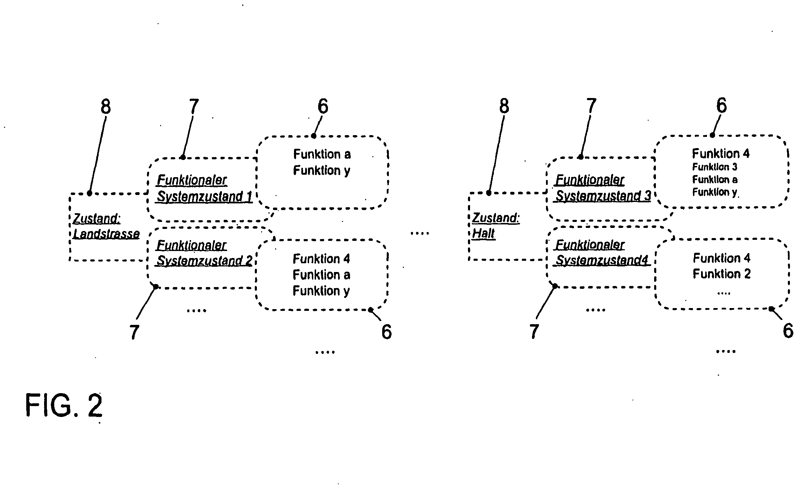

Um eine Verringerung der zu überwachenden Signale zu erreichen, ist vorgesehen, dass die Funktionen Zuständen des Fahrzeugs zugeordnet sind. In Fig. 2 ist eine solche Zuordnung dargestellt. Die einzelnen Funktionen sind Funktionsgruppen 6 zugeordnet. Hierbei kann eine Funktion mehreren Funktionsgruppen 6 zugeordnet sein. In Fig. 2 ist eine solche Zuordnung grafisch dargestellt. Die einzelnen Funktionsgruppen 6 sind funktionalen Systemzuständen 7, d.h. funktionalen Zuständen des Fahrzeugs, zugeordnet. Die funktionalen Zustände 7 sind Fahrzuständen 8 zugeordnet. Diese sind mit bestimmten Fahrsituationen verknüpft. Als vorteilhafte Fahrzustände haben sich herausgestellt ein Halt-Zustand, bei dem das Fahrzeug steht oder vermutlich in Kürze stehen wird, d.h. die aktuelle Geschwindigkeit niedriger 10 km/h ist. Als zweiter Fahrzustand wird der Fahrzustand "zäher Verkehr" gewählt, bei dem das Fahrzeug sich mit einer Geschwindigkeit von weniger als 40 km/h bewegt und eventuell kurzzeitig stehen bleibt. Ein so genanntes "Stop-and-Go" Fahrverhalten fällt in diese Kategorie. Als weiterer Zustand wird ein Stadt-Fahrzustand definiert, bei dem innerhalb einer betrachteten Zeitspanne von beispielsweise 60 s die Geschwindigkeit für einen Großteil dieser Zeitspanne zwischen 30 und 60 km/h beträgt. Bei diesem Fahrzustand Stadt ist kein Stillstand zu erwarten. Ein weiterer Fahrzustand Landstraße ist dadurch charakterisiert, dass die Geschwindigkeiten über 70 km/h liegen und nur kurze Geschwindigkeitsunterschreitungen bis hinunter zu etwa 50 km/h auftreten. Eine obere Geschwindigkeit von 100 km/h wird ebenfalls nur kurzfristig um maximal beispielsweise 10 bis 15 km/h überschritten. Ein weiterer Fahrzustand Autobahn ist dadurch charakterisiert, dass die Fahrzeuggeschwindigkeit über eine längere Zeitspanne oberhalb von 100 km/h liegt. Die soeben vorgestellte Einteilung in unterschiedliche Fahrzustände kann um weitere Fahrzustände erweitert sein. Ebenso ist eine Einteilung in weniger Fahrzustände möglich.

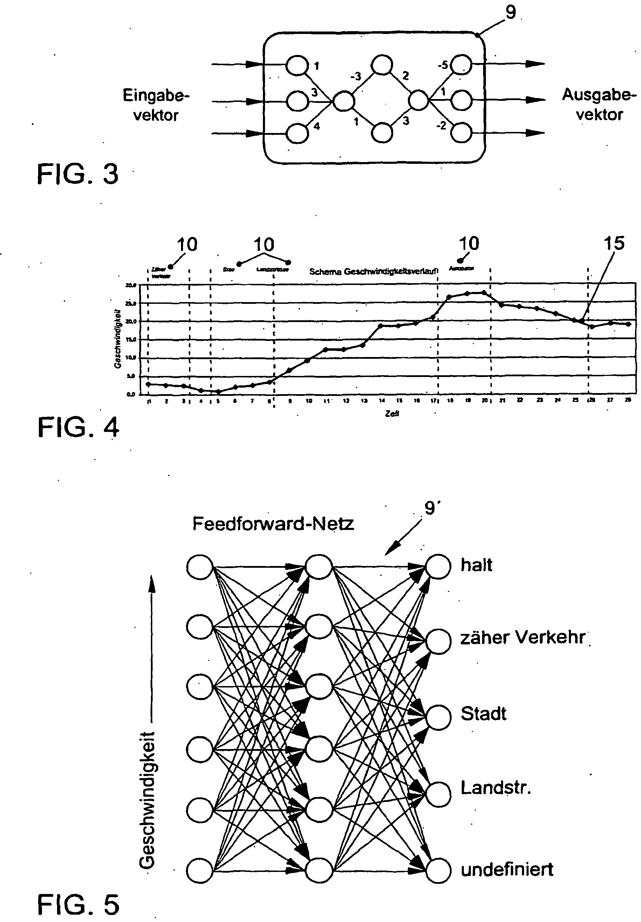

Um eine Klassifikation vorzunehmen, in welchem Fahrzustand sich das Fahrzeug befindet, hat es sich als vorteilhaft herausgestellt, ein neuronales Netz zu verwenden. In Fig. 3 ist schematisch ein neuronales Netz 9 dargestellt. Das neuronale Netz 9 kann zur Mustererkennung genutzt werden, um den Fahrzustand zu ermitteln. In dem Buch Neuronale Netze: Grundlagen und Anwendungen von Andreas Scherer, erschienen im Vieweg-Verlag, Braunschweig, 1997, kann ein neuronales Netzwerk zur Mustererkennung genutzt werden, um in dem hier vorliegenden Fall beispielsweise eine Fahrzustandserkennung zu gewährleisten. Ein neuronales Netzwerk kann als eine Ansammlung von Abbildungsvorschriften-verstanden werden, die eine Menge von Eingaben, deren spezifische Eigenschaften durch so genannte Eingabevektoren codiert werden, in eine Menge von Ausgaben abbilden. Hierbei können die Ein- und Ausgabevektoren aus unterschiedlichen Datenräumen entnommen sein. Ein neuronales Netz kann somit als Verknüpfung einfacher Prozessoren verstanden werden, die nur einfache Berechnungen, wie die Berechnung von gewichteten Summen aller Eingaben durchführen können. Verbindungen zwischen zwei Prozessoren werden durch Gewichte bewertet. Allein durch eine Modifikation dieser Gewichte kann ein Netzverhalten in eine gewünschte Form angepasst werden.

Allgemein kann die grundsätzliche Leistung eines neuronalen Netzwerks mit der Fähigkeit beschrieben werden, Daten zu klassifizieren. Hierbei werden historische bekannte Situationen mit den daraus resultierten Folgeereignissen assoziiert. Wendet man somit eine aktuelle Situation auf das neuronale Netz an, so erhält man als Ergebnis eine Prognose, welches Folgeereignis aus der aktuellen Situation folgen wird. Dieses bedeutet somit eine Klassifikation aufgrund zuvor erlernter Informationen. Dem neuronalen Netzwerk muss somit Wissen zugefügt werden, bevor es zur Klassifikation von Fahrzuständen genutzt werden kann. Hierbei kann Diagnosewissen eines Entwicklers eingesetzt werden. Als besonders vorteilhaft hat es sich jedoch herausgestellt, das notwendige Wissen in einem so genannten Lernprozess in das neuronale Netz einzubringen. Grob vereinfacht werden beim Lernen dem neuronalen Netzwerk Trainingseingabevektoren und zugehörige Ausgabevektoren übergeben. Das neuronale Netzwerk passt in der Lernphase seine Gewichte so an, dass zu einem vorgegebenen Muster in Form eines Eingabevektors der entsprechende Ausgabevektor korrekt erzeugt wird. Sind die Trainingsbeispiele günstig gewählt, so kann das neuronale Netz nach einer Einlemphase neue unbekannte Muster schnell und zuverlässig korrekt klassifizieren.

Als Eingabevektor können beispielsweise zeitlich hintereinander aufgenommene Geschwindigkeitsmesswerte verwendet werden. In Fig. 4 ist eine grafische Darstellung von Geschwindigkeitsmesswerten, die mit einer Messkurve 15 verbunden sind, gegenüber der Zeit grafisch aufgetragen. Nutzt man eine vorgegebene Anzahl von diesen Geschwindigkeitsmesswerten als Eingabevektor eines neuronales Netzes, so kann das Geschwindigkeitssignal als Eingangssignal für das neuronale Netz verwendet werden, um einen aktuellen Fahrzustand des Fahrzeugs zu ermitteln. Ermittelte Fahrzustände 10 sind am oberen Rand des Grafen angegeben.

In Fig. 5 ist schematisch ein neuronales Netz 9" dargestellt. Bei dem dargestellten Beispiel ist zusätzlich zu den Fahrzuständen Halt, zäher Verkehr, Stadt, Landstraße noch ein Fahrzustand undefiniert festgelegt. Dies soll dem neuronalen Netz die Möglichkeit einräumen, mit Trainingsmustern, d.h. Geschwindigkeitssignalen, umgehen zu können, die unlogisch sind. Dies bedeutet, dass dieser Zustand als Ausgangszustand nie erwartet wird. Beim Lernen werden die Gewichte des neuronalen Netzes nun so angepasst, dass ein Fehler zwischen dem erwarteten Fahrzustand (erwartete Ausgabe) und dem tatsächlich ermittelten Fahrzustand (tatsächliche Ausgabe) minimiert wird. Nach der Anlernphase kann der undefinierte Zustand als Ausgabezustand eliminiert werden.

Als besonders geeignete neuronale Netze für eine Ermittlung eines Fahrzustands haben sich neuronale Feedforward-Netze herausgestellt.

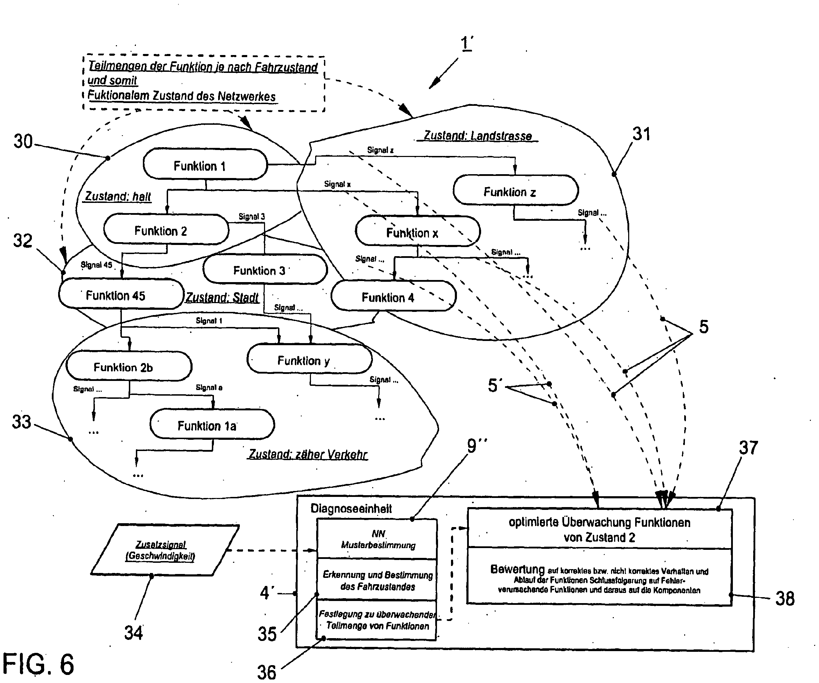

In Fig. 6 ist das funktionale Ablaufdiagramm 1' noch einmal in abgewandelter Form dargestellt. Die Funktionen 2 sind hier Fahrzuständen Halt 30, Landstraße 31, Stadt 32 und zäher Verkehr 34 zugeordnet. Die Diagnoseeinheit 4' umfasst ein neuronales Netz 9", welches als Eingangsvektor Messpunkte eines Geschwindigkeitssignals 34 nutzt, um anhand einer Musterbestimmung einen Fahrzustand zu erkennen 35. Beispielsweise durch Auswerten von Tabellen und/oder einer Datenbank werden die einem Fahrzustand zugeordneten Funktionsgruppen und hierüber die Funktionen ermittelt 36, die zu überwachen sind 37. Über die gestrichelten Pfeile 5' sind die Signale angedeutet, die für die Funktionen relevant sind, die dem Zustand Landstraße zugeordnet sind, der als aktueller Fahrzustand ermittelt ist. Es ist deutlich zu erkennen, dass die Anzahl der zu überwachenden Signale, die durch die gestrichelten Pfeile 5' angedeutet sind; geringer ist als die Anzahl der Signale, die bei dem funktionalen Ablaufdiagramm nach dem Stand der Technik, welches in Fig. 1 dargestellt ist, zu überwachen wären. Anhand der überwachten Signale werden die Funktionen, die der Funktionsgruppe Landstraße zugeordnet sind, überwacht und auf Gut- und Schlechtverhalten hin diagnostiziert 38.

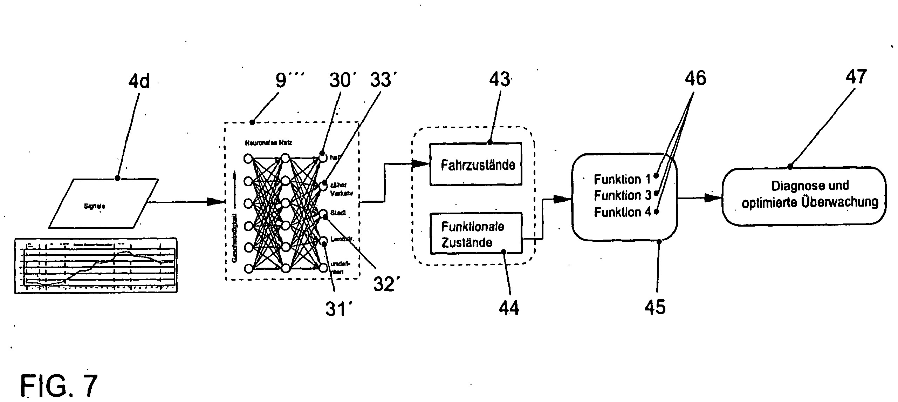

In Fig. 7 ist ein solches Diagnoseverfahren noch einmal schematisch dargestellt. Anhand von Eingangssignalen 41, die außer einem Geschwindigkeitssignal auch alternativ oder zusätzlich andere Signale, beispielsweise ein Bremsdrucksignal, ein Temperatursignal, ein Signal, welches die Fahrtdauer angibt, ein Freigabesignal für ein Fahrzeugsystem usw., umfassen können, und die als ausgezeichnete Signale bezeichnet werden und genutzt werden, um hieraus einen Eingangsvektor für ein neuronales Netz 9'" abzuleiten, mit dem Fahrzustände 30', 31', 32'; 33' ermittelt werden. Dem jeweils ermittelten Fahrzustand 43 sind ein oder mehrere funktionale Zustände 44 zugeordnet. Die Zuordnung erfolgt über Listen, eine Datenbank, Verknüpfungen usw. Den einzelnen funktionalen Zuständen 44 sind Funktionsgruppen 45 zugeordnet, denen wiederum Funktionen 46 zugeordnet sind. Diese Funktionen werden anschließend anhand der bei ihrer Ausführung über das Kommunikationsnetz übertragenen Signale diagnostiziert 47.

Alternativ und/oder zusätzlich zu dem ausgezeichneten oder den ausgezeichneten Signalen, die in den soeben beschriebenen Beispielen als Eingangssignale zum Ableiten eines Eingangsvektors für ein neuronales Netz verwendet wurden, können dieselben oder andere Signale als so genannte charakteristische Signale verwendet werden, um einen Zustand, insbesondere einen funktionalen Zustand, des Fahrzeugs zu kennzeichnen. Als charakteristische Signale können solche Signale gewählt werden, die eine Ausführung einer bestimmten Funktion charakterisieren.

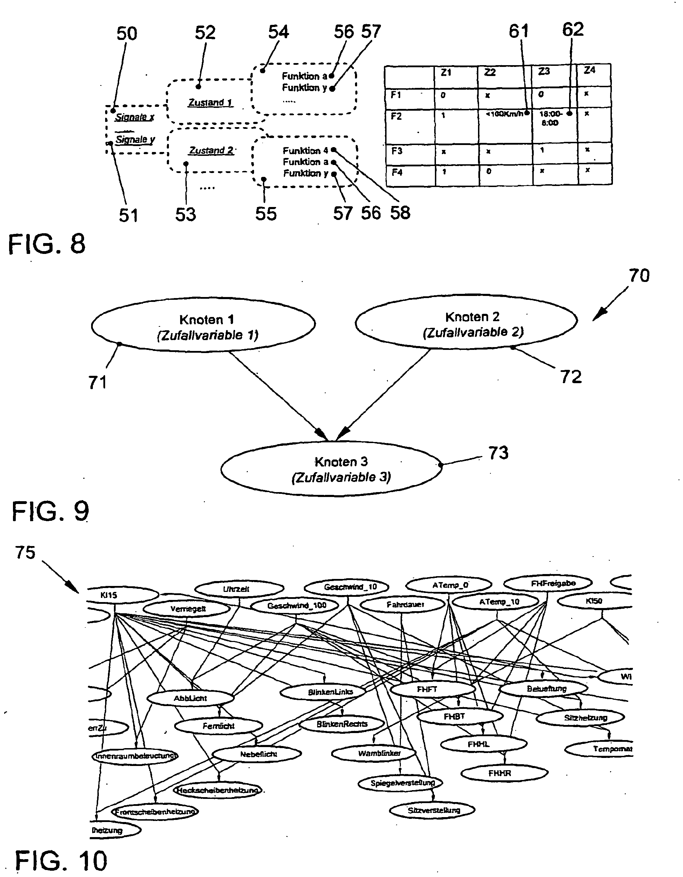

In Fig. 8 sind exemplarisch zwei charakteristische Signale 50, 51 dargestellt. Den charakteristischen Signalen 50, 51 sind Zustände 52, 53 zugeordnet. Diesen Zuständen 52, 53 sind wiederum Funktionsgruppen 54, 55 zugeordnet, deren wiederum Funktionen 56, 57, 58 zugeordnet sind. Zusätzlich zu einer starren Zuordnung der Funktionen zu Funktionsgruppen, die beispielsweise über Listen oder eine Datenbank erfolgen können, können in den Listen, Matrizen und/oder der Datenbank Regeln hinterlegt sein, die eine Zuordnung von den Funktionsgruppen von einzelnen Regeln abhängig machen. Diese sind in der Regel von den charakteristischen Signalen oder weiteren charakteristischen Signalen abhängig. Beispielsweise können ein Geschwindigkeitssignal und/oder ein Zeitsignal hierbei ausgewertet werden, wie dieses in den Matrixeinträgen 61, 62 angedeutet ist. Eine Funktion F2 ist beispielsweise dem Zustand Z2 zugeordnet, wenn ein Geschwindigkeitssignal eine Geschwindigkeit von kleiner 100 km/h für das Fahrzeug angibt. Die Funktion F2 ist zusätzlich dem Zustand Z3 zugeordnet, wenn ein Zeitsignal anzeigt, dass die Uhrzeit zwischen 18.00 Uhr und 8.00 Uhr liegt. Über das Auswerten der charakteristischen Signale 50, 51 bzw. weiterer charakteristischer Signale ist somit eine Eingrenzung der Funktionen möglich, die einem funktionalen Zustand zugeordnet sind, der aktuell ermittelt ist.

Um zu einer größeren Einengung der zu diagnostizierenden Funktionen zu gelangen, ist es vorteilhaft, ein bayessches Netz zu nutzen, welches die möglichen auftretenden Funktionen wichtet. In Fig. 9 ist ein stark vereinfachtes bayessches Netz 70 dargestellt. Einzelne Knoten des Netzes 71, 72, 73 repräsentieren Zufallsvariablen. Die Zufallsvariablen können beispielsweise mit einer Ausführung einer Funktion assoziiert sein. Dies bedeutet, dass die Zufallsvariablen angeben, mit welcher Wahrscheinlichkeit die zugeordnete Funktion ausgeführt wird.

Ein bayessches Netz gehört zur Klasse der kausalen Netze. Bayessche Netze werden verwendet, um Wissen für Systeme mit Unsicherheiten zu speichern und bei vorhandenen Beobachtungen (Evidenzen) Schlussfolgerungen daraus abzuleiten. Das Netz besteht aus einem grafischen Anteil, der auch qualitativer Anteil genannt wird, und einem wahrscheinlichkeitstheoretischen Teil, der auch quantitativer Anteil genannt wird. Der grafische Anteil des bayesschen Netzes definiert die Struktur eines Modells. Knoten repräsentieren hierbei Zufallsvariablen. Gerichtete Kanten (Verbindungen) zwischen den Knoten repräsentieren Beziehungen der Zufallsvariablen. Hieraus lassen sich bereits Eigenschaften wie eine Art des Informationsflusses ableiten. Eine Stärke der Beziehung zwischen den Variablen (Knoten) wird durch bedingte Wahrscheinlichkeiten festgelegt, die mittels des quantitativen Anteils des bayesschen Netzes berechnet werden. Hierfür wird die dem Satz von Bayes zugrundeliegende Methodik der Wahrscheinlichkeitstheorie verwendet. Ein bayessches Netz ist somit ein Speicher von unsicherem Wissen. In ein bayessches Netz kann Diagnosewissen eingelernt und in dieses hineinmodelliert werden. Das bayessche Netz gibt hierbei die Struktur des Wissens gewichtet wieder. Diese Eigenschaften werden bei den beschriebenen Ausführungsform von Diagnoseverfahren und Vorrichtungen zur Diagnose für Fahrzeuge ausgenutzt. Häufig existieren bei einer Diagnose nur ungenau bekannte Aussagen. Die Verwendung eines bayesschen Netzes ermöglicht es, solche Aussagen dennoch zu verwerten, um zuverlässige Aussagen treffen zu können. Ein bayessches Netz kann auch unscharfe Aussagen (Evidenzen) verwenden und miteinander in Beziehung setzen und hieraus eine wahrscheinlichkeitsgestützte Aussage über ein Vorherrschen eines Ereignisses bzw. ein Bevorstehend eines Ereignisses erzeugen. Die Repräsentation des Wissens basiert somit auf Wahrscheinlichkeitswerten für Hypothesen (Annahmen) und Evidenzen (Beobachtungen) aufgetretener Ereignisse (Aussagen). Evidenzen sind solche Informationen, die für oder gegen eine Hypothese sprechen. Mit Hilfe eines bayesschen Netzes ist es ebenfalls möglich, mit vereinfachten Modellen ein Fahrzeugsystem abzubilden. Da das System auch mit unsicheren Aussagen, die nicht exakt das System in allen seinen Einzelheiten widerspiegeln, sinnvoll umgehen kann. Hierdurch ist es möglich, einfache Sensoren und eine vereinfachte Modellierung des Fahrzeugsystems zu nutzen und dennoch zu präzisen Diagnoseaussagen zu gelangen.

In Fig. 10 ist ein Ausschnitt eines komplexeren bayesschen Netzes 75 dargestellt. Die Zufallsvariablen sind hierbei über gerichtete Kanten verknüpft.

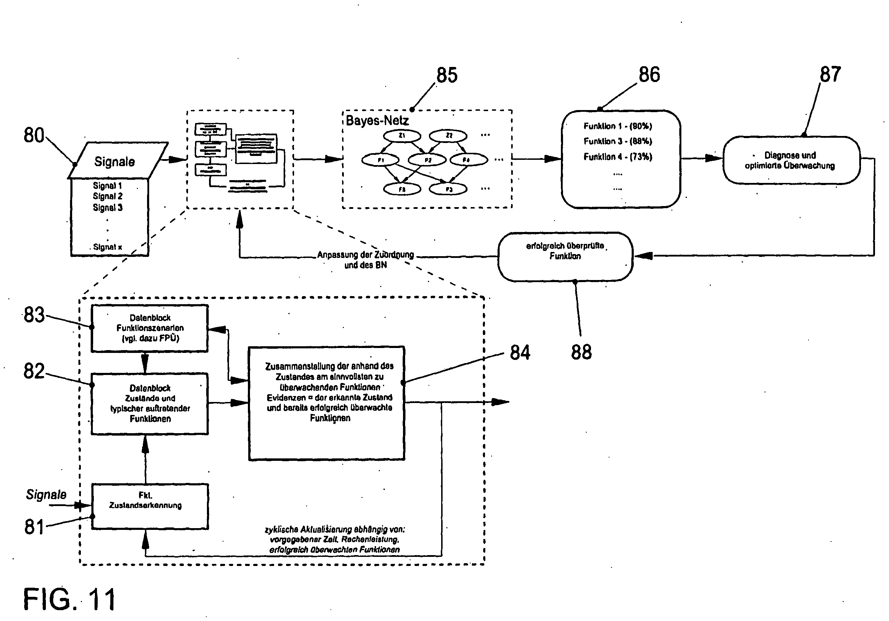

In Fig. 11 ist ein Verfahren zur Diagnose von Fahrzeugfunktionen und Fahrzeugsystem dargestellt, welches ein bayessches Netz ausnutzt, um die Anzahl der zu untersuchenden Funktionen einzuschränken. Charakteristische Signale 80 werden verwendet, um einen funktionalen Zustand des Fahrzeugs zu ermitteln 81. Wie in einem Block 82 angedeutet ist, werden den so erkannten Zuständen die ihnen zugeordneten Funktionen ermittelt 82. Hierbei werden zusätzlich Informationen über so genannte Funktionsszenarien, d.h. Bedienzusammenhänge von Funktionen, ausgenutzt 83. Die so ermittelten Funktionen werden als Evidenzen für das bayessche Netz festgelegt 84. Das bayessche Netz 85 wichtet nun für die ausgewählten Funktionen, d.h. zumindest für einen Teil der Funktionen, ihr Auftreten. Man erhält somit eine Liste 86 der Funktionen, die mit hoher Wahrscheinlichkeit ausgeführt werden bzw. ausgeführt werden werden. Eine Diagnose 87 der einzelnen Funktionen, d.h. eine Auswertung der diesen Funktionen zugeordneten Signale, erfolgt unter Berücksichtigung der Wichtung, d.h. der festgestellten Wahrscheinlichkeiten. Erfolgreich überprüfte Funktionen werden zur Feststellung des funktionalen Zustands und als Evidenzen für das bayessche Netz verwendet 88. Hierdurch kann sichergestellt werden, dass Funktionen, die als fehlerfrei erkannt sind, nicht erneut mit einer hohen Wahrscheinlichkeit versehen werden, obwohl sie zu den ausgeführten bzw. mit hoher Wahrscheinlichkeit ausgeführten Funktionen gehören. Hierdurch wird gewährleistet, dass nach und nach auch solche Funktionen diagnostiziert oder zumindest überwacht werden, die nur mit einer geringen Wahrscheinlichkeit in dem aktuell ermittelten Zustand ausgeführt werden.

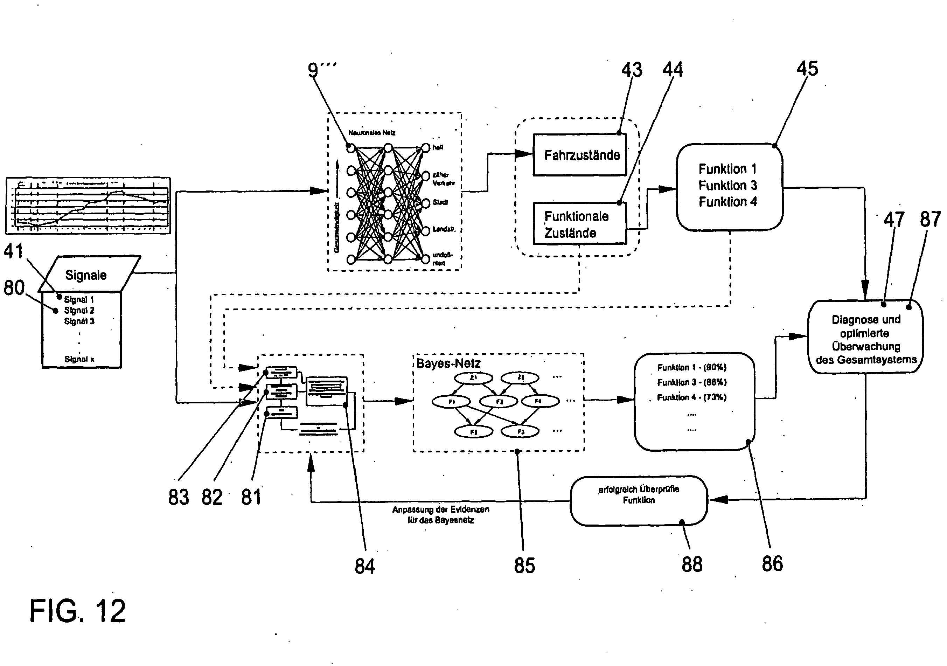

In Fig. 12 ist eine Ausführungsform eines Diagnoseverfahrens bzw. einer Diagnosevorrichtung schematisch dargestellt, bei der sowohl ein neuronales Netzwerk zum Ermitteln von Fahrzuständen und Eingrenzen der zu analysierenden Funktionen hierüber als auch ein bayessches Netz zur Eingrenzung der zu überwachenden Funktionen verwendet wird. Dieses System ergibt sich durch eine Kombination der in den Fig. 7 und 11 dargestellten Verfahren bzw. Systeme und Vorrichtungen. Technisch gleich wirkende Elemente sind mit denselben Bezugszeichen wie in Fig. 7 und 11 bezeichnet. Hierdurch erhalten einige Elemente zwei Bezugszeichen. Bei dem dargestellten Verfahren bzw. System können die im Zusammenhang mit den Fig. 7 und 11 beschriebenen Verfahren und Vorrichtungen alternativ genutzt werden, je nach dem, welche Rechenleistung beispielsweise für eine Diagnose zur Verfügung steht. Ferner ist es möglich, die Ergebnisse der Ermittlung des Fahrzustandes durch das neuronale Netz sowie der ermittelten Funktionen aufgrund der hieraus abgeleiteten funktionalen Zustände mit zu verwenden, um die Evidenzen für das bayeische Netz festzulegen. Hierdurch ist eine noch genauere Eingrenzung der zu analysierenden Funktionen möglich.

Das neuronale Netz kann so ausgestaltet sein, dass es auch im Betrieb weiter eingelernt wird. Hierdurch ist es möglich, die Mustererkennung so zu verbessern, dass eine fahrerabhängige Erkennung des Fahrzustands anhand persönlicher Fahrstile möglich ist.

Die beschriebenen Ausgestaltungen des Diagnoseverfahrens sind lediglich exemplarisch zu verstehen. Die Ausgestaltung im Konkreten kann hiervon abweichen. Insbesondere kann der Fahrzustand anhand anderer Signale als dem Geschwindigkeitssignal ermittelt werden. Die Diagnoseergebnisse können weiterverarbeitet werden, beispielsweise bei der Wartung und Instandsetzung. Das beschriebene Verfahren und die beschriebene Vorrichtung kann auch innerhalb eines Steuergeräts umgesetzt sein, das mehrere über ein internes Kommunikationsnetz verbundene Komponenten umfasst, die Signale austauschen.

### Bezugszeichenliste

- 1, 1': Ablaufdiagramm
- 2: Funktionen
- 3: Signale
- 4, 4': Diagnoseeinheit
- 5, 5': gestrichelte Pfeile
- 6: Funktionsgruppen
- 7: funktionaler Systemzustand
- 8: Fahrzustand
- 9, 9', 9": neuronales Netz
- 15: Messkurve
- 30, 30': Fahrzustand: Halt
- 31, 31': Fahrzustand: Landstraße
- 32; 32': Fahrzustand: Stadt
- 33, 33': Fahrzustand: zäher Verkehr
- 34: Geschwindigkeitssignal
- 37: überwachen der Funktionen
- 38: Diagnose auf Gut- und Schlechtverhalten
- 41: Signale
- 43: Fahrzustände
- 44: funktionale Zustände
- 45: Funktionsgruppen
- 46: Funktionen
- 47: Diagnose der Funktionen
- 50, 51: charakteristische Signale
- 52, 53: Zustände
- 54, 55: Funktionsgruppen
- 56, 57, 58: Funktionen
- 61, 62: Matrixeinträge
- 70: Bayessches Netz
- 71,72,73: Knoten
- 75: Bayessches Netz
- 80: Signale
- 81: Zustandserkennung
- 82: Auswahl der den ermittelten Zuständen zugeordneten Funktionen
- 83: Berücksichtigen der Funktionsszenarien
- 84: Zusammenstellen der Evidenzen für ein Bayes-Netz
- 85: Bayes-Netz
- 86: nach Wahrscheinlichkeiten ihres Auftretens gewichtete Liste von Funktionen
- 87: Diagnose der Funktionen
- 88: Berücksichtigung der erfolgreich geprüften Funktionen

## Patentansprüche

1. Verfahren zum Diagnostizieren von über ein Kommunikationsnetz vernetzten Fahrzeugsystemen eines Kraftfahrzeugs und von von diesen Fahrzeugsystemen bereitgestellten Funktionen (2, 46, 56-58), wobei die Fahrzeugsysteme beim Ausführen der Funktionen (2, 46, 56-58) Signale (3) über das Kommunikationsnetz austauschen und beim Diagnostizieren zumindest ein Teil der Signale (3) ausgewertet wird,
wobei
Zustände des Kraftfahrzeugs festgelegt sind und die Funktionen (2, 46, 56-58) den Zuständen zugeordnet sind und mindestens ein ausgezeichnetes Signal der Signale (3) verwendet wird, um mindestens einen vorliegenden der Zustände des Kraftfahrzeugs zu ermitteln, **dadurch gekennzeichnet, dass** mittels eines Bayes-Netzes (85) abhängig von dem mindestens einen ermittelten Zustand (44) eine Wichtung der dem mindestens einen ermittelten Zustand zugeordneten Funktionen (2, 46, 56-58) vorgenommen wird, so dass die Wichtung ein Maß dafür angibt, dass die dem mindestens einen ermittelten Zustand zugeordneten Funktionen (2, 46, 56-58) ausgeführt werden oder ausgeführt werden werden, und eine Diagnose der Funktionen (2, 46, 56-58) unter Berücksichtigung der Wichtung erfolgt.

2. Verfahren nach Anspruch 1, **dadurch gekennzeichnet, dass** beim Ermitteln des mindestens einen vorliegenden Zustands des Kraftfahrzeugs ein neuronales Netz (9, 9', 9", 9"') verwendet wird, wobei das mindestens eine ausgezeichnete Signal als ein Eingangssignal des neuronalen Netzes (9, 9', 9", 9"') genutzt wird.

3. Verfahren nach einem der genannten Ansprüche, **dadurch gekennzeichnet, dass** die Zustände funktionale Zustände des Kraftfahrzeugs sind und die Zuordnung der Funktionen (2, 46, 56-58) über Funktionsgruppen (45) erfolgt, die mit den funktionalen Zuständen (44) korrespondieren.

4. Verfahren nach Anspruch 3, **dadurch gekennzeichnet, dass** das mindestens eine ausgezeichnete Signal ein Geschwindigkeitssignal umfasst und das Ermitteln des Zustand ein Ermitteln eines von mehreren Fahrzuständen (30-33) umfasst, denen jeweils einer der funktionalen Zustände (44) zugeordnet ist.

5. Verfahren nach einem der Ansprüche 3 oder 4, **dadurch gekennzeichnet, dass** beim Ermitteln des Zustand charakteristische Signale der Signale (3) ausgewertet werden, wobei die charakteristischen Signale oder Kombinationen hiervon genutzt werden, um die funktionalen Zustände (46) zu identifizieren.

6. Verfahren nach einem der genannten Ansprüche, **dadurch gekennzeichnet, dass** das Diagnostizieren bereitgestellten Funktionen (2, 46, 56-58) auf die dem mindestens einen ermittelten Zustand zugeordneten Funktionen eingeschränkt wird und beim Diagnostizieren nur der Teil (3) der Signale ausgewertet wird, der für die Ausführung der Funktionen (2, 46, 56-58), die dem mindestens einen ermittelten Zustand zugeordnet sind, relevant ist.

7. Verfahren nach einem der genannten Ansprüche, **dadurch gekennzeichnet, dass** das eine erfolgreich ausgeführte Diagnose einer der Funktionen (2, 46, 56-58) als Evidenz bei der Bestimmung der Wichtung berücksichtigt wird.

8. Vorrichtung, geeignet für ein Diagnostizieren von über ein Kommunikationsnetz vernetzten Fahrzeugsystemen eines Kraftfahrzeugs und von diesen Fahrzeugsystemen bereitgestellten Funktionen (2, 46, 56-58), wobei die Fahrzeugsysteme beim Ausführen der Funktionen (2, 46, 56-58) Signale (3) über das Kommunikationsnetz austauschen und wobei beim Diagnostizieren zumindest ein Teil der Signale (3) ausgewertet wird,
wobei die Vorrichtung Diagnosemittel umfasst, die mit dem Kommunikationsnetz verbindbar sind oder verbunden sind, um den zumindest einen Teil der ausgetauschten Signale (3) auswerten zu können,
wobei
Zustände des Kraftfahrzeugs festgelegt sind und die Funktionen den Zuständen zugeordnet sind und Zustandsermittlungsmittel vorgesehen sind, um mindestens einen vorliegenden der Zustände des Kraftfahrzeugs unter Verwendung mindestens eines ausgezeichneten Signals zu ermitteln, und die Diagnosemittel Funktionsauswahlmittel umfassen, **dadurch gekennzeichnet, dass** die Funktionsauswahlmittel ausgestaltet sind, mittels eines Bayes-Netzes (85) abhängig von dem ermittelten mindestens einen Zustand (44) eine Wichtung der dem mindestens einen ermittelten Zustand zugeordneten Funktionen (2, 46, 56-58) vorzunehmen, so dass die Wichtung ein Maß für die Ausführung und/oder das Zur-Ausführung-Kommen der dem mindestens einen ermittelten Zustand zugeordneten Funktionen (2, 46, 56-58) angibt, und eine Diagnose der Funktionen (2, 46, 56-58) unter Berücksichtigung der Wichtung erfolgt.

9. Vorrichtung nach Anspruch 8, **dadurch gekennzeichnet, dass** die Zustandsermittlungsmittel ein neuronales Netz (9, 9', 9", 9"') umfassen, das beim Ermitteln des mindestens einen vorliegenden Zustands des Kraftfahrzeugs verwendbar ist, wobei das mindestens eine ausgezeichnete Signal als ein Eingangssignal des neuronalen Netzes (9, 9', 9", 9"') vorgesehen ist.

10. Vorrichtung nach einem der Ansprüche 8 oder 9, **dadurch gekennzeichnet, dass** die Zustände funktionale Zustände (44) des Kraftfahrzeugs sind und die Zuordnung der Funktionen (46) über Funktionsgruppen (45) erfolgt, die mit den funktionalen Zuständen (44) korrespondieren.

11. Vorrichtung nach Anspruche 10, **dadurch gekennzeichnet, dass** das mindestens eine ausgezeichnete Signal ein Geschwindigkeitssignal umfasst und das Ermitteln des Zustand ein Ermitteln eines von mehreren Fahrzuständen (30-33) umfasst, denen jeweils einer der funktionalen Zustände (44) zugeordnet ist.

12. Vorrichtung nach einem der Ansprüche 10 oder 11, **dadurch gekennzeichnet, dass** beim Ermitteln des Zustands charakteristische Signale der Signale auswertbar sind, wobei die charakteristischen Signale oder Kombinationen hiervon nutzbar sind, um die funktionalen Zustände (44) zu identifizieren.

13. Vorrichtung nach einem der Ansprüche 9 bis 12, **dadurch gekennzeichnet, dass**.die Diagnosemittel ausgestaltet sind, das Diagnostizieren der bereitgestellten Funktionen auf das Diagnostizieren der dem mindestens einen ermittelten Zustand zugeordneten Funktionen (2, 46, 56-58) einzuschränken und beim Diagnostizieren nur den Teil der Signale (3) auszuwerten, der für die Ausführung der Funktionen (2, 46, 56-58) relevant ist, die dem mindestens einen ermittelten Zustand zugeordnet sind

14. Vorrichtung nach einem der Ansprüche 9 bis 13, **dadurch gekennzeichnet, dass** das die Zustandsermittlungsmittel ausgestaltet sind, eine erfolgreich ausgeführte Diagnose einer der Funktionen (2, 46, 56-58) als Evidenz bei der Bestimmung der Wichtung zu berücksichtigen.

## Claims

1. Method for the diagnosis of vehicle systems of a motor vehicle which are interlinked by means of a communication network and of functions (2, 46, 56-58) which are made available by these vehicle systems, wherein the vehicle systems exchange signals (3) via the communication network during the execution of the functions (2, 46, 56-58) and at least a subset of the signals (3) is evaluated during the diagnostic process,
wherein states of the motor vehicle are defined and the functions (2, 46, 56-58) are assigned to the states and at least one salient signal of the signals (3) is used to determine at least one present state of the states of the motor vehicle, **characterized in that** weighting of the functions (2, 46, 56-58) which are assigned to the at least one determined state is performed by means of a Bayes network (85) as a function of the at least one determined state (44), with the result that the weighting is an indication of whether that the functions (2, 46, 56-58) which are assigned to the at least one determined state are being executed or will be executed, and a diagnosis of the functions (2, 46, 56-58) is carried out taking into account the weighting.

2. Method according to Claim 1, **characterized in that** during the determination of the at least one
present state of the motor vehicle a neural network (9, 9', 9", 9'") is used, wherein the at least one salient signal is used as an input signal of the neural network (9, 9', 9", 9"') .

3. Method according to one of the specified claims, **characterized in that** the states are functional states of the motor vehicle, and the functions (2, 46, 56-58) are assigned by means of function groups (45) which correspond to the functional states (44).

4. Method according to Claim 3, **characterized in that** the at least one salient signal comprises a speed signal, and the determination of the state comprises determination of one of a plurality of driving states (30-33) which are each assigned one of the functional states (44).

5. Method according to one of Claims 3 or 4, **characterized in that** characteristic signals of the signals (3) are evaluated during the determination of the state, wherein the characteristic signals or combinations thereof are used to define the functional states (44).

6. Method according to one of the specified claims, **characterized in that** the diagnosis of functions (2, 46, 56-58) which are made available is restricted to the functions which are assigned to the at least one determined state, and only the subset (3) of the signals which is relevant for the execution of the functions (2, 46, 56-58) which are assigned to the at least one determined state is evaluated during the diagnostic process.

7. Method according to one of the specified claims, **characterized in that** a successfully carried out diagnosis of one of the functions (2, 46, 56-58)
is taken into account as evidence in the determination of the weighting.

8. Device suitable for performing diagnosis of vehicle systems of a motor vehicle which are interlinked by means of a communication network and of functions (2, 46, 56-58) which are made available by these vehicle systems, wherein the vehicle systems exchange signals (3) via the communication network during the execution of the functions (2, 46, 56-58), and wherein during the diagnostic process at least a subset of the signals (3) is evaluated, wherein the device comprises diagnostic means which can be or are connected to the communication network in order to be able to evaluate the at least one subset of the exchanged signals (3),
wherein states of the motor vehicle are defined and the functions are assigned to the states and state-determining means are provided in order to determine at least one present state of the states of the motor vehicle using at least one salient signal, and the diagnostic means comprise function-selection means, **characterized in that** the function-selection means are configured to perform weighting of the functions (2, 46, 56-58) assigned to the at least one determined state, by means of a Bayes network (85) as a function of the determined at least one state (44), with the result that the weighting is an indication of the execution and/or the imminent execution of the functions (2, 46, 56-58) which are assigned to the at least one determined state, and diagnosis of the functions (2, 46, 56-58) is carried out taking into account the weighting.

9. Device according to Claim 8, **characterized in that** the state-determining means comprise a neural network (9, 9', 9", 9"") which can be used during
the determination of the at least one present state of the motor vehicle, wherein the at least one salient signal is provided as an input signal of the neural network (9, 9', 9", 9"').

10. Device according to one of Claims 8 and 9, **characterized in that** the states are functional states (44) of the motor vehicle, and assignment of the functions (46) is carried out by means of function groups (45) which correspond to the functional states (44).

11. Device according to Claim 10, **characterized in that** the at least one salient signal comprises a speed signal, and the determination of the state comprises determination of one of a plurality of driving states (30-33) which are each assigned one of the functional states (44).

12. Device according to one of Claims 10 and 11, **characterized in that** characteristic signals of the signals can be evaluated during the determination of the state, wherein the characteristic signals or combinations thereof can be used to identify the functional states (44).

13. Device according to one of Claims 9 to 12, **characterized in that** the diagnostic means are configured to restrict the diagnosis of the functions which are made available to the diagnosis of the functions (2, 46, 56-58) which are assigned to the at least one determined state, and to evaluate during the diagnosis only the subset of the signals (3) which is relevant for the execution of the functions (2, 46, 56-58) which are assigned to the at least one determined state.

14. Device according to one of Claims 9 to 13, **characterized in that** the state-determining means are configured to take into account a successfully executed diagnosis of one of the functions (2, 46, 56-58) as evidence during the determination of the weighting.

## Revendications

1. Procédé pour diagnostiquer des systèmes de véhicule d'un véhicule automobile branchés en réseau par le biais d'un réseau de communication ainsi que des fonctions (2, 46, 56-58) délivrées par ces systèmes de véhicule, les systèmes de véhicule échangeant des signaux (3) sur le réseau de communication lors de l'exécution des fonctions (2, 46, 56-58) et au moins une partie des signaux (3) étant interprétée lors du diagnostic, des états du véhicule automobile étant constatés et les fonctions (2, 46, 56-58) étant associées aux états et au moins un signal excellent des signaux (3) étant utilisé pour déterminer au moins un état existant parmi les états du véhicule automobile, **caractérisé en ce qu'**une pondération des fonctions (2, 46, 56-58) associées à l'au moins un état déterminé est effectuée au moyen d'un réseau bayésien (85) en fonction de l'au moins un état (44) déterminé, de telle sorte que la pondération donne une indication que les fonctions (2, 46, 56-58) associées à l'au moins un état déterminé sont exécutées ou seront exécutées et un diagnostic des fonctions (2, 46, 56-58) a lieu en tenant compte de la pondération.

2. Procédé selon la revendication 1, **caractérisé en ce qu'**un réseau neuronal (9, 9', 9", 9"') est utilisé lors de la détermination de l'au moins un état existant du véhicule automobile, l'au moins un signal
excellent étant utilisé comme un signal d'entrée du réseau neuronal (9, 9', 9", 9"').

3. Procédé selon l'une des revendications précédentes, **caractérisé en ce que** les états sont des états fonctionnels du véhicule automobile et l'association des fonctions (2, 46, 56-58) s'effectue par le biais de groupes de fonction (45) qui correspondent avec les états fonctionnels (44).

4. Procédé selon la revendication 3, **caractérisé en ce que** l'au moins un signal excellent comprend un signal de vitesse et la détermination de l'état comprend une détermination d'un parmi plusieurs états de conduite (30-33) auquel est respectivement associé l'un des états fonctionnels (44).

5. Procédé selon l'une des revendications 3 ou 4, **caractérisé en ce que** lors de la détermination de l'état, des signaux caractéristiques des signaux (3) sont interprétés, les signaux caractéristiques ou des combinaisons de ceux-ci étant utilisés pour identifier les états fonctionnels (44).

6. Procédé selon l'une des revendications précédentes, **caractérisé en ce que** le diagnostic des fonctions (2, 46, 56-58) délivrées est limité aux fonctions associées à l'au moins un état déterminé et, lors du diagnostic, seule est interprétée la partie (3) des signaux qui est pertinente pour l'exécution des fonctions (2, 46, 56-58) qui sont associées à l'au moins un état déterminé.

7. Procédé selon l'une des revendications précédentes, **caractérisé en ce qu'**un diagnostic exécuté avec succès de l'une des fonctions (2, 46, 56-58) est pris en compte comme preuve lors de la détermination de la pondération .

8. Dispositif, conçu pour diagnostiquer des systèmes de véhicule d'un véhicule automobile branchés en réseau par le biais d'un réseau de communication ainsi que des fonctions (2, 46, 56-58) délivrées par ces systèmes de véhicule, les systèmes de véhicule échangeant des signaux (3) sur le réseau de communication lors de l'exécution des fonctions (2, 46, 56-58) et au moins une partie des signaux (3) étant interprétée lors du diagnostic, le dispositif comprenant des moyens de diagnostic qui peuvent être connectés ou qui sont connectés avec le réseau de communication pour pouvoir interpréter l'au moins une partie des signaux (3) échangés, des états du véhicule automobile étant constatés et les fonctions étant associées aux états et des moyens de détermination d'état étant prévus pour déterminer au moins un état existant parmi les états du véhicule automobile en utilisant au moins un signal excellent et les moyens de diagnostic comprenant des moyens de sélection de fonction, **caractérisé en ce que** les moyens de sélection de fonction sont configurés pour effectuer une pondération des fonctions (2, 46, 56-58) associées à l'au moins un état déterminé au moyen d'un réseau bayésien (85) en fonction de l'au moins un état (44) déterminé, de telle sorte que la pondération donne une indication pour l'exécution et/ou l'exécution à venir des fonctions (2, 46, 56-58) associées à l'au moins un état déterminé et un diagnostic des fonctions (2, 46, 56-58) a lieu en tenant compte de la pondération.

9. Dispositif selon la revendication 8, **caractérisé en ce que** les moyens de détermination d'état comprennent un réseau neuronal (9, 9', 9", 9"') qui peut être utilisé lors de la détermination de l'au moins un état existant du véhicule automobile, l'au moins un signal excellent étant prévu comme un signal d'entrée du réseau neuronal (9, 9', 9", 9"').

10. Dispositif selon l'une des revendications 8 ou 9, **caractérisé en ce que** les états sont des états fonctionnels (44) du véhicule automobile et l'association des fonctions (46) s'effectue par le biais de groupes de fonction (45) qui correspondent avec les états fonctionnels (44).

11. Dispositif selon la revendication 10, **caractérisé en ce que** l'au moins un signal excellent comprend un signal de vitesse et la détermination de l'état comprend une détermination d'un parmi plusieurs états de conduite (30-33) auquel est respectivement associé l'un des états fonctionnels (44).

12. Dispositif selon l'une des revendications 10 ou 11, **caractérisé en ce que** lors de la détermination de l'état, des signaux caractéristiques des signaux peuvent être interprétés, les signaux caractéristiques ou des combinaisons de ceux-ci pouvant être utilisés pour identifier les états fonctionnels (44).

13. Dispositif selon l'une des revendications 9 à 12, **caractérisé en ce que** les moyens de diagnostic sont configurés pour limiter le diagnostic des fonctions délivrées au diagnostic des fonctions (2, 46, 56-58) associées à l'au moins un état déterminé et, lors du diagnostic, pour n'interpréter que la partie des signaux (3) qui est pertinente pour l'exécution des fonctions (2, 46, 56-58) qui sont associées à l'au moins un état déterminé.

14. Dispositif selon l'une des revendications 9 à 13, caractérisé en ce les moyens de détermination d'état sont configurés pour tenir compte en tant que preuve d'un diagnostic exécuté avec succès de l'une des fonctions (2, 46, 56-58) lors de la détermination de la pondération.
